# EUROPÄISCHE PATENTANMELDUNG

(11) **EP 2 774 712 A1**
(43) Veröffentlichungstag der Anmeldung: **10.09.2014**
(21) Anmeldenummer: 13158179.5
(22) Anmeldetag: 07.03.2013
(51) Int. Cl.: B23K 26/06, B23K 26/067

(54) **Laserverfahren mit unterschiedlichem Laserstrahlbereich innerhalb eines Strahls**

(71) Anmelder: Siemens Aktiengesellschaft, 80333 München (DE); Fraunhofer-Gesellschaft zur Förderung der angewandten Forschung e.V., 80686 München (DE)
(72) Erfinder: Burbaum, Bernd, 14612 Falkensee (DE); Pirch, Norbert, 52074 Aachen (DE)

(57) **Zusammenfassung**

Durch die Verwendung eines Laserstrahls (1), der einen äußeren und einen inneren Laserstrahlbereich (4,7) aufweist mit unterschiedlichen Intensitäten kann ein höherer Temperaturgradient entlang der z-Richtung erzeugt werden.

## Beschreibung

Die Erfindung betrifft das Lasern, bei dem ein Laserstrahl verwendet wird, der zwei verschiedene Laserstrahlbereiche aufweist.

Laserschweißverfahren zum Umschmelzen von Rissen oder zum Auftragsschweißen auf ein Substrat ist Stand der Technik.

Generell besteht das Problem beim Schweißen darin, dass Risse zwischen Umschmelzgut oder Auftragsschweißung entstehen können.

Bisher wird dies dadurch gelöst, dass das gesamte Bauteil vorgeheizt wird.

Beim einkristallinen Umschweißen oder einkristallinen Auftragsschweißen ist es Aufgabe ein Temperaturfeld mit einem Temperaturgradienten auf der Erstarrungsfront, zu erzeugen, dessen Z-Komponenten die verbleibenden zwei Komponenten dominiert.

Darüber hinaus soll das Temperaturfeld so ausgelegt sein, dass im Nachlaufbereich thermische Druckspannungen erzeugt werden.

Es ist daher Aufgabe der Erfindung ein Verfahren und eine Vorrichtung aufzuzeigen, mit dem dies einfacher gestaltet werden kann.

Die Aufgabe wird gelöst durch ein Verfahren gemäß Anspruch 1.

In den Unteransprüchen sind weitere vorteilhafte Maßnahmen aufgelistet, die beliebig miteinander kombiniert werden können, um weitere Vorteile zu erzielen.

Durch die Erfindung vereinfacht sich die operative und prozessuale Vorwärmung beim Schweißen und die Erzeugung von Temperaturfeldern, die ein einkristallines Wachstum favorisieren.

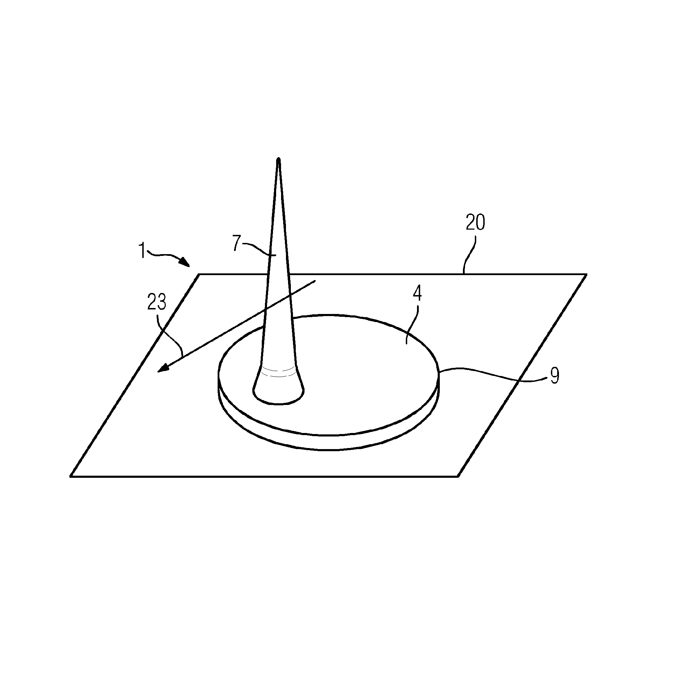

Die Figur zeigt schematisch die Erfindung.

Die Figur und die Beschreibung stellen nur Ausführungsbeispiele der Erfindung dar.

In der Figur ist eine erfindungsgemäße Intensitätsverteilung eines Laserstrahls 1 gezeigt.

Ein innerer Laserstrahlbereich 7 ist nicht konzentrisch zu einem äußeren Laserstrahlbereichs 4 angeordnet.

Im Inneren eines Laserstrahls 1 ist ein innerer Laserstrahlbereich 7 vorhanden, der eine höhere Intensität oder eine höhere Leistung, insbesondere von 30-1000W/mm², ganz insbesondere 100-300W/mm² aufweist und einen Riss umschmelzen kann oder Material für eine Auftragsschweißung aufschmelzen kann.

Der innere Laserstrahlbereich 7 ist, vorzugsweise vollständig, umgeben von einem äußeren Laserstrahlbereich 4, der einen größeren Querschnitt, insbesondere einen größeren Durchmesser aufweist und eine geringere Intensität oder eine geringer Laserleistung aufweist, so dass der äußere Laserstrahlbereich 4 den Bereich vor und hinter dem inneren Laserstrahlbereich 7 nur vor- oder nachwärmt.

Vorzugsweise beträgt der Durchmesser des inneren Laserstrahlbereichs 7 1mm und der des äußeren Laserstrahlbereichs 4 beträgt 4mm.

Der innere Bereich 7 ist nicht konzentrisch im äußeren Laserstrahlbereich 4 angeordnet.

Durch diese Intensitätsverteilung wird der Temperaturgradient in Strahlrichtung des Laserstrahls 1 erhöht und ein solcher Laserstrahl 1 kann vorzugsweise beim einkristallinen Umschmelzen oder Auftragsschweißen verwendet werden.
Ein Beispiel für ein Substrat, das eine gerichtet erstarrte Struktur aufweist, ist PWA 1483SX, das eine einkristalline Struktur ergibt.

Das Verhältnis der Intensitäten oder der Leistung der Laserstrahlbereiche 4, 7 zueinander beträgt mindestens 1,5, insbesondere mindestens 2.

Die Fläche des inneren Laserstrahlbereichs 7 beträgt vorzugsweise maximal 25% des äußeren Laserstrahlbereichs 4.

In Verlaufsrichtung 23 des Laserstrahls 1 gesehen, befindet sich der innere Laserstrahlbereich 7 näher am umzuschmelzenden Bereich.
In Verfahrrichtung 23 des Laserstrahls 1 gesehen ist der innere Laserstrahlbereich 7 vorne angeordnet, trifft also zuerst auf das Substrat 20.

Der innere Laserstrahlbereich 7 kann mit seinem Rand am Rand 9 des äußeren Laserstrahlbereichs 4 angeordnet sein (nicht dargestellt) oder einen Abstand zur Kante des äußeren Laserstrahlbereichs 4 aufweisen.

## Patentansprüche

1. Verfahren
zur Laserbearbeitung eines Substrats (20),
insbesondere Schweißen eines Substrat (20),
bei dem ein Riss umgeschmolzen wird oder
Material aufgetragen wird,
**dadurch kennzeichnet, dass**
ein Laserstrahl (1) verwendet wird,
der in sich zwei verschiedene, zueinander asymmetrische Laserstrahlbereiche (4, 7) aufweist.

2. Verfahren nach Anspruch 1,
bei dem der Laserstrahl (1) einen inneren Laserstrahlbereich (7) aufweist,
der umgeben ist von einem äußeren Laserstrahlbereich (4), insbesondere vollständig umgeben ist vom äußeren Laserstrahlbereich (4).

3. Verfahren nach einem oder beiden der Ansprüche 1 oder 2, wobei der äußere Laserstrahlbereich (4) eine geringere Laserleistung aufweist oder
zu einer geringeren Erwärmung des Substrats (20) führt.

4. Verfahren nach einem oder mehreren der Ansprüche 1, 2 oder 3,
bei dem ein metallisches Substrat (20) behandelt wird.

5. Verfahren nach einem oder mehreren der Ansprüche 1, 2, 3 oder 4,
bei dem ein Riss umgeschmolzen wird.

6. Verfahren nach einem oder mehreren der Ansprüche 1, 2, 3 oder 4,
bei dem eine Auftragsschweißung stattfindet.

7. Verfahren nach einem oder mehreren der Ansprüche 1 bis 6,
bei dem die eine Intensität oder eine Leistung des inneren Laserstrahlbereichs (7) mindestens 1,5 mal,
insbesondere mindestens 2 mal,
so groß ist wie die Intensität oder die Leistung des äußeren Laserstrahlbereichs (4).

8. Verfahren nach einem oder mehreren der Ansprüche 1 bis 7,
bei dem die Fläche des inneren Laserstrahlbereich (7) auf dem Substrat (20) maximal 25% der Fläche des äußeren Laserstrahlbereichs (4) auf dem Substrat (20) beträgt.

9. Verfahren nach einem oder mehreren der Ansprüche 1 bis 8,
bei dem die Leistung des inneren Laserstrahlbereichs (7) 30-1000 W/mm²,
insbesondere 100-300 W/mm²,
beträgt.

10. Verfahren nach einem oder mehreren der Ansprüche 1 bis 9,
bei dem der innere Laserstrahlbereich (7) mit seinem Rand am Rand (9) des äußeren Laserstrahlbereichs (7) angeordnet ist.

11. Verfahren nach einem oder mehreren der Ansprüche 1 bis 9,
bei dem der innere Laserstrahlbereich (7) einen Abstand zum Rand (9) des äußeren Laserstrahlbereichs (4) aufweist.

12. Verfahren nach einem oder mehreren der Ansprüche 1 bis 10,
bei dem der innere Laserstrahlbereich (7) in Verfahrrichtung (23) des Laserstrahls (1) vorne angeordnet ist.
